Europäisches Patentamt

European Patent Office

Office européen des brevets

(19)

(11) **EP 1 064 793 B1**

(12) **EUROPÄISCHE PATENTSCHRIFT**

(45) Veröffentlichungstag und Bekanntmachung des Hinweises auf die Patenterteilung:
**27.02.2002 Patentblatt 2002/09**

(21) Anmeldenummer: **99916801.6**

(22) Anmeldetag: **18.03.1999**

(51) Int Cl.$^7$: **H04N 9/11**

(86) Internationale Anmeldenummer:
**PCT/DE99/00754**

(87) Internationale Veröffentlichungsnummer:
**WO 99/49666 (30.09.1999 Gazette 1999/39)**

(54) **VERFAHREN ZUR BILDANALYSE UND KORREKTUR VON VIDEOSIGNALWERTEN**

METHOD FOR ANALYSING IMAGES AND FOR CORRECTING THE VALUES OF VIDEO SIGNALS

PROCEDE POUR ANALYSER DES IMAGES ET CORRIGER DES VALEURS DE SIGNAUX VIDEO

(84) Benannte Vertragsstaaten:
**DE**

(30) Priorität: **23.03.1998 DE 19812461**

(43) Veröffentlichungstag der Anmeldung:
**03.01.2001 Patentblatt 2001/01**

(73) Patentinhaber: **Heidelberger Druckmaschinen Aktiengesellschaft**
**69115 Heidelberg (DE)**

(72) Erfinder: **KOHN, Michael**
**D-24536 Neumünster (DE)**

(56) Entgegenhaltungen:
**EP-A- 0 723 363       DE-A- 4 310 727**

Printed by Jouve, 75001 PARIS (FR)

**Beschreibung**

Die Erfindung bezieht sich auf das Gebiet der elektronischen Videotechnik und betrifft ein Verfahren zur Bildanalyse und Korrektur von Videosignalwerten bei der Bearbeitung von Videofilmen.

Bei der Herstellung eines Videofilmes werden mit einer Videokamera einzelne Szenen aufgenommen, wobei jede Szene eine aus einer Vielzahl von Einzelbildern bestehende Videosequenz darstellt und die Videosignalwerte in einem Bildspeicher abgelegt. Nach den Aufnahmen wird der Videofilm in einer Videobearbeitungsstation bearbeitet. Bei der Nachbearbeitung erfolgt die Gestaltung des Videofilms durch Schnitt und durch Anfertigen von Titeln sowie eine durch eine Bildanalyse unterstützte Farbkorrektur, durch die Mängel kompensiert oder Farben redaktionell geändert werden.

Bei einer Bildanalyse werden Farbwerte beispielsweise hinsichtlich des Bildumfangs, der Bildgradation und eines eventuell vorhandenen Farbstichs untersucht. Durch eine Bildumfangsanalyse werden Bildlicht- und Bildtiefewerte für eine Anpassung des Bildumfangs, durch eine Bildgradationsanalyse wird eine Gradationskorrekturkurve für. eine Kontrastkorrektur und durch eine Farbstichanalyse Farbstichwerte für eine Farbstichkorrektur ermittelt.

Für die herkömmliche Farbkorrektur werden in der Regel auf den Farbwerten R, G-und B basierende, analoge Bildanalyseverfahren verwendet, bei denen die Bildumfangsanalyse und die Farbstichanalyse direkt anhand der Farbwerte R, G und B und die Bildumfangsanalyse anhand eines aus Farbwerten R, G und B abgeleiteten Helligkeitssignals erfolgen. Die herkömmlichen Verfahren haben den Nachteil, daß sie relativ langsam sind und daß die Analyseergebnisse weitestgehend manuell in entsprechende Korrekturen umgesetzt werden müssen.

Aus der DE-C-43 10 727 ist bereits ein Verfahren zur Analyse einer zu reproduzierenden Bildvorlage in der Druckvorstufe bekannt, bei dem RGB-Farbwerte in entsprechende Lab-Farbwerte eines empfindungsgemäß gleichabständigen CIELAB-Farbraumes transformiert werden und die Analyse der Bildvorlage anhand der transformierten Lab-Farbwerte vorgenommen wird, wodurch nahezu automatisch optimale Analyseergebnisse hinsichtlich Bildumfang, Bildgradation und/oder Farbstich erzielt werden. Die Druckschrift enthält aber keinen Hinweis darauf, das Analyseverfahren auf die Videosignalwerte von Einzelbildern und Videosequenzen eines Videofilms anzuwenden.

Aus der EP-A-0 723 363 ist ein Verfahren zur Realisierung einer erfindungsgemäßen Farbadaption bekannt, bei dem RGB-Farbwerte von einzelnen Farbbildern oder Farbbildfolgen in einen an das Sehempfinden des Menschen angepaßten Farbraum transformiert und anschließend rücktransformiert werden. Das bekannte Verfahren wird zwar auf Farbbildfolgen angewendet, es erfolgt aber keine Analyse hinsichtlich Bildumfang, Bildgradation und/oder Farbstich anhand von tranformierten Lab-Farbwerten des CIELAB-Farbraumes.

Aufgabe der vorliegenden Erfindung ist es daher, ein Verfahren zur Bildanalyse und Korrektur von Videosignalwerten bei der Bearbeitung von Videofilmen derart zu verbessern, daß optimale Analyseergebnisse für eine Farbkorrektur von Videoeinzelbildern und Videosequenzen erreicht wird.

Diese Aufgabe wird durch die Merkmale des Anspruchs 1 gelöst. Vorteilhafte Weiterbildungen und Ausgestaltungen sind in den Unteransprüchen angegeben.

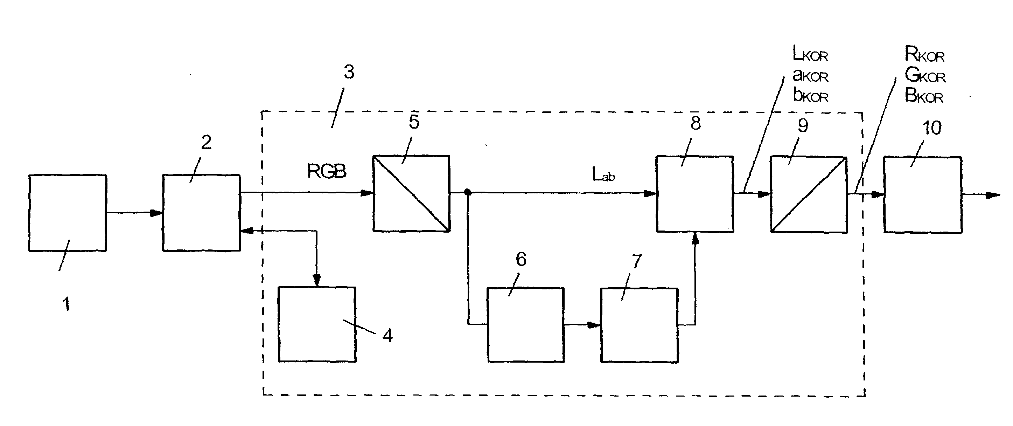

Die Erfindung wird nachfolgend anhand der Figur näher erläutert.

Die Figur zeigt'den prinzipiellen Signalfluß in Verbindung mit einer Videobearbeitungsstation.

Eine Videokamera (1) als Eingabegerät nimmt eine Vielzahl von aus Einzelbildern bestehende Videosequenzen auf. Die von der Videokamera (1) erzeugten Videosignafwerte R, G und B werden in einem Eingangs-Bildspeicher (2) abgelegt. Nach der Aufnahme wird das Videofilm in einer Videobearbeitungsstation (3) bearbeitet. Bei der Nachbearbeitung erfolgt zunächst die Gestaltung des Videofilms durch Schneiden und durch Anfertigen von Titeln in einer Schneidestation (4). Dazu werden die Videosignalwerte R, G und B von dem Eingangs-Bildspeicher (2) in die Schneidestation (4) transferiert und nach der Bearbeitung auf den Eingangs-Bildspeicher (2) zurückgeschrieben.

Nach der Gestaltung erfolgt die durch eine Bildanalyse unterstützte Farbkorrektur, durch die Mängel kompensiert oder Farben redaktionell geändert werden. Dazu werden die Videosignalwerte R, G und B zunächst einem Eingangs-Farbumsetzer (5) zugeführt, in dem die Videosignalwerte R, G und B des für die Videokamera (1) spezifischen Eingangsfarbraumes nach der dreidimensionalen Umsetzungsfunktion L, a, b = f (R, G, B) in die Videosignalwerte L, a und b des von dem Eingangsfarbraum unabhängigen, empfindungsgemäß gleichabständigen Lab-Farbraumes transformiert werden.

Die transformierten Videosignalwerte L, a und b werden Videosequenz für Videosequenz einer Bildanalyseeinheit (6) zugeführt, an der vorgewählt werden kann, ob die Bildanalyse bezüglich des Bildumfangs und/oder der Bildgradation und/oder eines eventuell vorhandenen Farbstich erfolgen soll.

Bei der Bildumfangsanalyse eines Einzelbildes wird die Häufigkeitsverteilung (Helligkeitshistogramm) der Helligkeitskomponenten L der transformierten Videosignalwerte L a und b in dem Einzelbild bestimmt. Anschließend wird der Bildlichtwert $B_L$ des Einzelbildes und der Bildtiefewert $B_T$ des Einzelbildes aus der Häufigkeitsverteilung durch Festlegen des maximalen und minimalen Helligkeitswertes L in Abhängigkeit von dem Verlauf der Häufigkeitsverteilung im Bildlichtbereich und im Bildtiefebereich ermittelt. Die Bildumfangsanalyse ist ausführlich in der DE-C-43 10 727 und der DE-C-43 09 879 beschrieben.

Bei der Bildgradationsanalyse eines Einzelbildes wird die Häufigkeitsverteilung der Helligkeitswerte L in vorteilhafter Weise nur aus den bildwichtigen Bereichen eines Einzelbildes bestimmt. Dazu wird das Einzelbild zunächst in Teilbilder unterteilt. Für jedes Teilbild wird separat ein Histogramm der Helligkeitswerte L n Form von Teilbildhistogrammen bestimmt. Die Teilbildhistogramme werden mit statistischen Verfahren ausgewertet und die bildwichtigen Teilbilder klassifiziert. Aus den Teilbildhistogrammen der klassifizierten Teilbilder wird ein Summenhistogramm berechnet, das der Häufigkeitsverteilung der Helligkeitwerte L aus den bildwichtigen Bereichen des Einzelbildes entspricht. Aus dem Summenhistogramm wird dann eine Korrekturkurve für die Bildgradationskennlinie nach einem Verfahren der Histogramm-Modifikation abgeleitet. Die Bildgradationsanalyse ist ausführlich in der DE-C-43 10 727 und der DE-C-43 09 878 beschrieben.

Bei der Farbstichanalyse wird zur sicheren Erfassung eines Farbstiches in dem Einzelbild der Bereich großer Helligkeitswerte und/oder der Bereich kleiner Helligkeitswerte der Helligkeitskomponente L in dem zu analysierenden Einzelbild in mindestens einen Helligkeitsbereich unterteilt. Der Farbstich wird in dem jeweiligen Helligkeitsbereich als mittlere Abweichung der Videosignalwerte von Unbunt durch bildpunktweise Mittelung der Videosignalwerte a und b in den entsprechenden Helligkeitsbereichen festgestellt. Der für die Auswertung der Farbstichanalyse heranzuziehende Farbstich wird dann durch Auswahl und/oder Zusammenfassen von für die Helligkeitsbereiche ermittelten Farbstichen gebildet. Die Farbstichanalyse ist ausführlich in der DE-C-43 10 727 und der DE-C-43 09 877 beschrieben.

Erfindungsgemäß wird bei der Bildanalyse zunächst ein Satz von Analysewerten, wie Bildlichtwert, Bildtiefewert, Farbstichwert und Gradations-Korrekturwerte, für jedes der m Einzelbilder der jeweils aktuellen Videosequenz ermittelt und dann der für die aktuelle Videosequenz repräsentative Satz von Analysewerten durch Mittelwertbildung aus den m Sätzen von Analysewerten der Einzelbilder bestimmt.

Um schnellere Analyseergebnisse zu erhalten, erweist es sich als vorteilhaft, lediglich jedes n-te Einzelbild einer aktuellen Videosequenz zu analysieren und den für die aktuelle Videosequenz repräsentativen Satz von Analysewerten aus den n Sätzen von Analysewerten der untersuchten Einzelbilder ermitteln, wobei "n" von dem Operator wählbar ist.

Zur weiteren Verbesserung des Ergebnisses der Bildanalyse erfolgt in vorteilhafter Weise eine Modifizierung der Mittelung des Bildumfangs, indem durch einen empirisch ermittelten Gewichtungsfaktor G festgestellt wird, ob der tatsächliche Bildlichtwert $B_L$ und Bildtiefewert $B_T$ vom gemittelten Bildlichtwert $B_{LM}$ und Bildtiefewert $B_{TM}$ abweicht, so daß die entsprechende Korrektur etwas stärker oder schwächer wirkt. Der modifizierte Bildlichtwert $B^*_L$ und der modifizierte Bildtiefewert $B^*_T$ ergeben sich dann unter Berücksichtigung der Standardabweichung der Bildlicht- und Bildtiefewerte nach folgenden Gleichungen:

$$B^*_L = B_{LM} - D \times G$$

$$B^*_T = B_{TM} + D \times G$$

Die anhand der Videosignalwerte L, a und b des Lab-Farbraumes automatisch ermittelten Analysewerte für die einzelnen Videosequenzen können vom Operator bei Bedarf manuell modifiziert werden, um beispielsweise besondere Farbgestaltungen zu erreichen. Die automatisch ermittelten oder gegebenenfalls manuell modifizierten Analysewerte werden einem Korrekturrechner (7) zugeführt. In dem Korrekturrechner (7) werden anhand der Analysewerte der einzelnen Videosequenzen entsprechende dreidimensionale Korrekturfunktionen $L_{KOR}$, $a_{KOR}$, $b_{KOR} = f$ (L, a, b) für die einzelnen Videosequenzen, beispielsweise ICC-Farbprofile, berechnet und in eine Korrekturstufe (8) eingegeben. Dabei kann der Operator beispielsweise durch Betrachtung der einzelnen Szenen des Videofilms auf einem Monitor entscheiden, ob jede Videosequenz mit ihrem eigens berechneten ICC-Farbprofil oder ob mehrere aufeinander folgende Videosequenzen mit dem ICC-Farbprofil eines der aufeinander folgenden Videosequenzen korrigiert werden sollen.

Nach der Berechnung der ICC-Farbprofile erfolgt die Farbkorrektur. Dazu werden zunächst die Videosignalwerte R, G und B aus dem Eingangs-Bildspeicher (2) sequenzweise ausgelesen und in dem Eingangs-Farbumsetzer (5) in die Videosignaiwerte L, a und b transformiert. Die transformierten Videosignalwerte L, a und b werden dann in der Korrekturstufe (8) nach der Korrekturfunktion $L_{KOR}$, $a_{KOR}$, $b_{KOR} = f$ (L, a, b) korrigiert. Anschließend werden die korrigierten Videosignalwerte $L_{KOR}$, $a_{KOR}$ und $b_{KOR}$ in einem Ausgangs-Farbumsetzer (9) nach der Funktion $R_{KOR}$, $G_{KOR}$, $B_{KOR} = f$ ($L_{KOR}$, $a_{KOR}$, $b_{KOR}$) in die korrigierten Videosignalwerte $R_{KOR}$, $G_{KOR}$ und $B_{KOR}$ rücktransformiert und in einem Ausgangs-Bildspeicher (10) bis zur Weiterverarbeitung zwischengespeichert.

Der Eingangs-Farbumsetzer (5), die Korrekturstufe (8) und der Ausgangs-Farbumsetzer (9) sind beispielsweise als Tabellenspeicher (LUT) ausgebildet, in denen die Ausgangswerte durch die funktionsmäßig zugehörigen Eingangswerte adressierbar gespeichert sind.

**Patentansprüche**

1. Verfahren zur Bildanalyse und Korrektur von Videosignalwerten bei der Bearbeitung eines aus Videosequenzen zusammengesetzten Videofilms, wobei jede Videosequenz aus einer Vielzahl von Einzelbildern besteht und wobei

- die Videosignalwerte (R,G,B) eines ersten Farbraumes nach einer dreidimensionalen Umsetzungsfunktion [L,a,b = f (R,G,B)] in die Videosignalwerte (L,a,b) eines von dem ersten Farbraum unabhängigen und empfindungsgemäß gleichabständigen zweiten Farbraumes transformiert werden,
- für Einzelbilder einer Videosequenz anhand der transformierten Videosignalwerte (L,a,b) jeweils mindestens ein Analysewert für Bildumfang und/oder Gradation und/oder Farbstich ermittelt wird,
- aus den Analysewerten der analysierten Einzelbilder der Videosequenz mindestens ein für die Videosequenz repräsentativer Analysewert durch Mittelwertbildung gebildet wird,
- jeweils aus den für eine Videosequenz repräsentativen Analysewerten eine dreidimensionale Korrekturfunktion [$L_{KOR}, a_{KOR}, b_{KOR}$ = f(L, a,b)] ermittelt wird und
- mindestens die Videosignalwerte (L,a,b) der betreffenden Videosequenz nach der ermittelten Korrekturfunktion korrigiert werden.

2. Verfahren nach Anspruch 1, **dadurch gekennzeichnet, daß**

- für die Bildanalyse einer Videosequenz alle Einzelbilder der Videosequenz herangezogen werden und
- aus den Analysewerten der Einzelbilder der Videosequenz mindestens ein für die Videosequenz repräsentativer Analysewert durch Mittelwertbildung gebildet wird.

3. Verfahren nach Anspruch 1, **dadurch gekennzeichnet, daß**

- für die Bildanalyse einer Videosequenz Einzelbilder der Videosequenz ausgewählt werden und
- aus den Analysewerten der ausgewählten Einzelbilder der Videosequenz mindestens ein für die Videosequenz repräsentativer Analysewert durch Mittelwertbildung gebildet wird.

4. Verfahren nach mindestens einem der Ansprüche 1 bis 3, **dadurch gekennzeichnet, daß** die Korrekturfunktion [$L_{KOR}, a_{KOR}, b_{KOR}$ = f (L,a,b] ein ICC-Farbprofil ist.

5. Verfahren nach mindestens einem der Ansprüche 1 bis 4, **dadurch gekennzeichnet, daß** bei der Analyse des Bildumfangs eines Einzelbildes

- die Häufigkeitsverteilung (Helligkeitshistogramm) der Helligkeitskomponenten (L) der transformierten Videosignalwerte (L,a,b) in dem Einzelbild bestimmt wird und
- als Analysewerte der Bildlichtwert (hellster relevanter Helligkeitswert) des Einzelbildes und der Bildtiefewert (dunkelster relevanter Helligkeitswert) des Einzelbildes aus der Häufigkeitsverteilung durch Festlegen des maximalen und minimalen Helligkeitswertes (L) in Abhängigkeit von dem Verlauf der Häufigkeitsverteilung im Bildlichtbereich und im Bildtiefebereich ermittelt wird.

6. Verfahren nach mindestens einem der Ansprüche 1 bis 5, **dadurch gekennzeichnet, daß** bei der Analyse der Bildgradation eines Einzelbildes

- das zu analysierende Einzelbild geometrisch in eine Anzahl Teilbilder unterteilt wird,
- für jedes Teilbild getrennt die Häufigkeitsverteilung der Helligkeitskomponenten (L) der Videosignalwerte (L,a,b*) in dem entsprechenden Teilbild als Teilbildhistogramm bestimmt wird,
- die Teilbildhistogramme der einzelnen Teilbilder ausgewertet und anhand der Auswertung die für die Bildgradation bildwichtigen Teilbilder festgestellt werden,
- aus den Teilbildhistogrammen der bildwichtigen Teilbilder ein Summenhistogramm berechnet wird, das der Häufigkeitsverteilung der Helligkeitskomponenten (L) der Bildwerte (L,a,b) in den bildwichtigen Teilbildem entspricht und
- aus dem Summenhistogramm nach einem Verfahren der Histogrammmodifikation als Analysewerte eine Korrekturkurve (G= f(L)) zur Korrektur der Bildgradationskennlinie des Einzelbildes zwecks Kontrastkorrektur ermittelt wird.

7. Verfahren nach mindestens einem der Ansprüche 1 bis 6, **dadurch gekennzeichnet, daß** bei der Analyse eines. Farbstiches eines Einzelbildes

- zur Erfassung eines Farbstiches in dem Einzelbild ein Bereich großer Helligkeitswerte (Bildlichtbereich) und/oder ein Bereich kleiner Helligkeitswerte (Bildtiefebereich) der Helligkeitskomponenten (L) der Videosignalwerte (L,a,b) in dem zu analysierenden Einzelbild in mindestens einen Helligkeitsbereich unterteilt wird,
- der Wert eines eventuell vorhandenen Farbstiches in dem jeweiligen Helligkeitsbereich durch Mittelung der Farbkomponenten (a b) der Videosignalwerte (L,a,b) in den Helligkeitsbreichen festgestellt wird und
- als Analysewert der für die Auswertung der Farbstichanalyse heranzuziehende Farbstichwert durch Auswahl und/oder Zusammenfassen von für die einzelnen Helligkeits-bereiche ermittelten Farbstichwerten gebildet wird.

**Claims**

1. Method for image analysis and correction of video signal values in the processing of a video film composed of video sequences, wherein each video sequence consists of a plurality of individual images, and wherein

   - the video signal values (R,G,B) of a first colour space are transformed by a three-dimensional conversion function [L,a,b=f(R,G,B)] into the video signal values (L,a,b) of a second colour space independent of the first colour space and equidistantly spaced according to perception,
   - from the transformed video signal values (L,a, b), at least one analysis value for image content and/or gradation and/or colour cast is determined for each individual image of a video sequence,
   - from the analysis values of the analysed individual images of the video sequence, at least one analysis value representative of the video sequence is obtained by signal averaging,
   - from each analysis value representative of a video sequence, a three-dimensional correction function [LKOR,aKOR,bKOR=f(L,a,b)] is derived and
   - at least the video signal values (L,a,b) of the video sequence concerned are corrected in accordance with the derived correction function.

2. Method according to Claim 1, **characterized in that**

   - for the image analysis of a video sequence, all individual images of the video are reviewed and
   - from the analysis values of the individual images of the video sequence, at least one analysis value representative of the video sequence is obtained by signal averaging.

3. Method according to Claim 1, **characterized in that**

   - for the image analysis of a video sequence, individual images of the video sequence are selected and
   - from the analysis values of the selected individual images of the video sequence, at least one analysis value representative of the video sequence is obtained by signal averaging.

4. Method according to at least one of Claims 1 to 3, **characterized in that** the correction function [LKOR,aKOR,bKOR=f(L,a,b)] is an ICC colour profile.

5. Method according to at least one of Claims 1 to 4, **characterized in that** in the analysis of the image content of an individual image

   - the frequency distribution (brightness histogram) of the brightness components (L) of the transformed video signal values (L,a,b) in the individual image is determined and
   - as analysis values, the image highlight value (brightest relevant brightness value) of the individual image and the image shadow value (darkest relevant brightness value) of the individual image are derived from the frequency distribution by determining the maximum and minimum brightness value (L) as a function of the curve of the frequency distribution in the image highlight range and in the image shadow range.

6. Method according to at least one of Claims 1 to 5, **characterized in that** in the analysis of the image gradation of an individual image

   - the individual image to be analysed is geometrically divided into a number of part images,
   - the frequency distribution of the brightness components (L) of the video signal values (L,a, b*) in the corresponding part image is determined for each part image separately as a part image histogram,
   - the part image histograms of the individual part images are evaluated, and the pictorially significant part images for the image gradation are determined from this evaluation,
   - a total histogram which corresponds to the frequency distribution of the brightness components (L) of the image values (L,a,b) in the pictorial significant part images is computed from the part image histograms of the pictorially significant part images and
   - as analysis value, a correction curve (G=f(L)) for correcting the image gradation characteristic of the individual image for the purpose of contrast correction is determined from the total histogram by a method of histogram modification.

7. Method according to at least one of Claims 1 to 6, **characterized in that** in the analysis of a colour cast of an individual image

   - to detect a colour cast in the individual image, a region of high brightness values (image highlight region) and/or a region of low brightness values (image shadow region) of the brightness components (L) of the video signal values (L,a, b) in the individual image to be analysed are divided into at least one brightness range,

- the value of any colour cast present in a given brightness range is determined by averaging the colour components (a b) of the video signal ' values (L,a,b) in the brightness ranges and

- as analysis value, the colour cast value to be adopted for the evaluation of the colour cast analysis is obtained by selection and/or combination of colour cast values determined for the individual brightness ranges.

## Revendications

1. Procédé d'analyse d'images et de correction des valeurs de signal vidéo pour le traitement d'un film vidéo composé de séquences vidéo, chaque séquence vidéo se composant d'un grand nombre d'images séparées, selon lequel

    - les valeurs (R, G, B) du signal vidéo d'un premier espace couleurs sont transformées selon une fonction de conversion tridimensionnelle [L, a, b = f (R, G, B)] en des valeurs de signal vidéo (L, a, b) d'un second espace couleurs indépendant du premier espace couleurs et de même intervalle de perception,
    - pour les images séparées d'une séquence vidéo, à l'aide des valeurs de signal vidéo, transformées (L, a, b), on détermine chaque fois au moins une valeur d'analyse du contour de l'image et/ou de la gradation et/ou de l'aspect de la couleur,
    - à partir des valeurs d'analyse des images séparées, provenant de l'analyse de la séquence vidéo, on forme au moins une valeur d'analyse représentative de la séquence vidéo en formant une valeur moyenne,
    - et chaque fois à partir des valeurs d'analyse représentatives d'une séquence vidéo, on détermine une fonction de correction tridimensionnelle [$L_{KOR}$, $a_{KOR}$, $b_{KOR}$ = f (L, a, b)] et
    - on corrige au moins les valeurs de signal vidéo (L, a, b) de la séquence vidéo concernée selon la fonction de correction obtenue.

2. Procédé selon la revendication 1,
    **caractérisé en ce qu'**
    on utilise toutes les images séparées d'une séquence vidéo pour l'analyse d'images d'une séquence vidéo et
    à partir des valeurs d'analyse des différentes images de la séquence vidéo, on forme au moins une valeur d'analyse représentative de la séquence vidéo en formant une valeur moyenne.

3. Procédé selon la revendication 1,
    **caractérisé en ce que**
    pour l'analyse des images d'une séquence vidéo, on sélectionne les images séparées d'une séquence vidéo et
    à partir des valeurs d'analyse des images séparées, sélectionnées dans la séquence vidéo, on forme au moins une valeur d'analyse représentative de la séquence vidéo en formant une valeur moyenne.

4. Procédé selon au moins l'une des revendications 1 à 3,
    **caractérisé en ce que**
    la fonction de correction [$L_{KOR}$, $a_{KOR}$, $b_{KOR}$ = f (L, a, b)] est un profil de couleur ICC.

5. Procédé selon au moins l'une des revendications 1 à 4,
    **caractérisé en ce que**
    pour l'analyse du contour d'une image séparée,

    - on détermine la répartition de fréquences (histogramme de luminosité) des composantes de luminosités (L) des valeurs du signal vidéo transformées (L, a, b) dans l'image séparée et
    - comme valeurs d'analyse, on détermine la valeur de luminosité d'image (valeur de luminosité la plus claire caractéristique) de l'image séparée et la valeur de la profondeur d'image (valeur de luminosité la plus sombre caractéristique) de l'image séparée, à partir de la répartition de la fréquence en fixant la valeur de luminosité maximale et minimale (L) en fonction du profil de la répartition de la fréquence dans la plage de la luminosité d'image et de la plage de la profondeur d'image.

6. Procédé selon au moins l'une des revendications 1 à 5,
    **caractérisé en ce que**
    pour l'analyse de la gradation d'une image séparée,

    - pour son analyse on subdivise l'image séparée de manière géométrique en un certain nombre d'images partielles,
    - pour chaque image partielle, on détermine séparément la répartition de la fréquence des composantes de luminosité (L) des valeurs du signal vidéo (L, a, b *) dans l'image partielle correspondante comme histogramme de l'image partielle,
    - on exploite les histogrammes des différentes images partielles et, à l'aide de l'exploitation, on détermine les images partielles importantes pour la gradation de l'image,
    - à partir des histogrammes partiels des images partielles importantes pour l'image, on calcule un histogramme somme qui correspond à la répartition de fréquence des composantes de luminosités (L) des valeurs d'image (L, a, b) dans les images partielles importantes pour l'image et

- à partir de l'histogramme somme, selon un procédé de modification de l'histogramme, comme valeur d'analyse, on détermine une courbe de correction [G = f(L)] pour corriger la courbe caractéristique de gradation de l'image séparée pour la correction du contraste.

7. Procédé selon au moins l'une des revendications 1 à 6,
   **caractérisé en ce que**
   lors de l'analyse de l'aspect de la couleur d'une image séparée

   - pour saisir un aspect de couleur dans l'image séparée, on subdivise en au moins une zone de luminosité une zone des grandes valeurs de luminosité (zone de luminosité d'image) et/ou une zone de faible valeur de luminosité (zone de profondeur d'image) des composantes de luminosité (L) des valeurs du signal vidéo (L, a, b) dans l'image séparée à analyser,
   - on détermine la valeur d'un aspect de couleur éventuellement existant dans chaque zone de luminosité en faisant la moyenne des composantes de couleur (a b) des valeurs du signal vidéo (L, a, b) dans les zones de luminosité et
   - comme valeur d'analyse, on forme la valeur de l'aspect de couleur servant à l'exploitation de l'analyse de l'aspect de couleur par la sélection et/ou la combinaison des valeurs d'aspect de couleurs obtenues pour les différentes zones de luminosité.

EP 1 064 793 B1

8

3

2

5

8

9

10

RGB

L$_{ab}$

L$_{KOR}$
a$_{KOR}$
b$_{KOR}$

R$_{KOR}$
G$_{KOR}$
B$_{KOR}$

1

4

6

7